Europäisches Patentamt

European Patent Office

Office européen des brevets

(19)

(11) Publication number: **0 366 479**

**A2**

# (12) EUROPEAN PATENT APPLICATION

(21) Application number: **89311086.6**

(22) Date of filing: **27.10.89**

(51) Int. Cl.5 **C08G 63/78 , C08G 63/199**

(30) Priority: **28.10.88 JP 270969/88**
            **28.10.88 JP 270970/88**

(43) Date of publication of application:
**02.05.90 Bulletin 90/18**

(84) Designated Contracting States:
**DE FR GB IT**

(71) Applicant: **MITSUBISHI RAYON CO., LTD.**
**3-19, Kyobashi-2-chome Chuo-Ku**
**Tokyo(JP)**

(72) Inventor: **Mori, Hiroshi Mitsubishi Rayon**
**Company Limited**
**20-1, Miyuki-cho**
**Otake-shi Hiroshima(JP)**
Inventor: **Yamamoto, Naoki Mitsubishi Rayon**
**Company Limited**
**20-1, Miyuki-cho**
**Otake-shi Hiroshima(JP)**
Inventor: **Fujimoto, Masaharu Mitsubishi**
**Rayon Company Ltd.**
**20-1, Miyuki-cho**
**Otake-shi Hiroshima(JP)**

(74) Representative: **Lawrence, Peter Robin**
**Broughton et al**
**GILL JENNINGS & EVERY 53-64 Chancery**
**Lane**
**London WC2A 1HN(GB)**

(54) **Process for preparation of polyester.**

(57) A polyester having a high degree of polymerization is prepared in a short time by a process wherein a precondensate obtained from (A) an alicyclic diol or a mixture of an alicyclic diol and an aliphatic diol and (B) an aromatic dicarboxylic acid or a functional derivative thereof in the form of fine particles is dispersed in a silicone oil by using a graft polymer comprising a polyorganosiloxane as the backbone and a polymer of a monoethylenically unsaturated monomer as the branch or a graft polymer comprising a polymer of a monoethylenically unsaturated monomer as the backbone and a polyorganosiloxane as the branch as a dispersion stabilizer; and the dispersion is subjected to heat polymerization at a final polymerization temperature of from a temperature lower by 40°C than the melting point of the obtained polyester to a temperature higher by 20°C than the melting point thereof.

EP 0 366 479 A2

# PROCESS FOR PREPARATION OF POLYESTER

The present invention relates to a polymerization process for the preparation of a polyester. More particularly, it relates to a process for the preparation of an aromatic polyester having an alicyclic diol as one component.

A polyester represented by poly-1,4-cyclohexylene-dimethylene terephthalate has a higher melting point, heat resistance and hydrolysis resistance than a polyalkylene terephthalate represented by polyethylene terephthalate, and accordingly, the application of this polyester as an engineering plastic is becoming wide-spread. A copolymer formed by copolymerizing ethylene glycol as a third component with the monomeric components of the above-mentioned polymer has excellent transparency, gas-barrier property and heat resistance, and therefore, this copolymer is widely used for the production of films and sheets.

A combination of the bulk melt polymerization process and the solid phase polymerization process is most popular as the industrial process used for the preparation of the above-mentioned polyester, but in the bulk melt polymerization process, the melt viscosity of the polyester rises with an increase of the molecular weight, and therefore, a greater stirring power is required. Moreover, if the melt viscosity of the polyester is increased, the transfer of heat from the polymerization vessel is lowered, and a deterioration of the polyester occurs due to local thermal decomposition. Furthermore, if the melt viscosity of the polyester is increased, it takes a longer time to withdraw the polyester from the polymerization vessel and the degree of polymerization of the polyester is lowered at the final stage of the withdrawal, and therefore, it is difficult to obtain a polyester having a high molecular weight.

In the conventional technique, therefore, to increase the degree of polymerization of the polyester, there has been adopted, for example, a process in which the melt polymerization is not conducted for a long time, the polyester is once withdrawn and shaped into a pellet having a relatively low degree of polymerization, and this pellet is subjected to the solid phase polymerization. This process, however, is disadvantageous in that a very long time is required for completion of the polymerization.

The present invention previously proposed a polymerization process for the preparation of a polyalkylene terephthalate, in which a specific dispersion stabilizer is used and fine particles are heat-polymerized in a silicone oil, in Japanese Unexamined Patent Publication No. 60-141714, No. 60-141715, and No. 62-39621.

The primary object of the present invention is to solve the above-mentioned problems involved in the production of an aromatic polyester comprising an alicyclic diol component as one component thereof; namely, to provide a polymerization process for the preparation of this aromatic polyester wherein decomposition of the formed polyester can be controlled and a polyester having a high degree of polymerization can be obtained in a short time.

More specifically, in accordance with the present invention, there is provided a process for the preparation of a polyester, which comprises dispersing a precondensate obtained from (A) an alicyclic diol or a mixture of an alicyclic diol and an aliphatic diol, and (B) an aromatic dicarboxylic acid or a functional derivative thereof, in the form of fine particles in a silicone oil by using a graft polymer comprising a polyorganosiloxane as the backbone and a polymer of a monoethylenically unsaturated monomer as the branch, or a graft polymer comprising a polymer of a monoethylenically unsaturated monomer as the backbone and a polyorganosiloxane as the branch, as a dispersion stabilizer, and subjecting the dispersion to heat polymerization at a final polymerization temperature in the range of from a temperature lower by 40 $^\circ$ C than the melting point of the obtained polyester to a temperature higher by 20 $^\circ$ C than the melting point of the obtained polyester.

An alicyclic diol having, for example, 4 to 20 carbon atoms, is used as the aliphatic diol component in the present invention, and as specific examples, there can be mentioned cyclopentane-diol, cyclohexane-diol, cyclohexane-dimethanol, cyclohexane-diethanol, cyclopentane-diethanol, 4,4'-dihydroxycyclohexyl thioether, and 4,4'-dihydroxycyclohexylmethane. Preferably, 1,4-cyclohexane-dimethanol is used, most preferably trans-1,4-cyclohexane-dimethanol, because a polyester having a high melting point is thus obtained.

An aliphatic diol having, for example, 2 to 6 carbon atoms, is used as the aliphatic diol component, and as specific examples, there can be mentioned ethylene glycol, propylene glycol, 1,4-butane-diol and hexamethylene glycol. Most preferably, ethylene glycol is used.

When a mixture of an alicyclic diol and an aliphatic diol is used as the diol component, the molar ratio between the two diols is not particularly critical, but in view of the effect of the alicyclic diol or the effect of a lowering the melting point during the mixing, preferably the alicyclic diol/aliphatic diol molar ratio is from 100/0 to 20/80.

As the aromatic dicarboxylic acid, there can be mentioned, for example, terephthalic acid, isophthalic acid, diphenyl-m,m-dicarboxylic acid, diphenyl-p,p'-dicarboxylic acid, diphenylmethane-m,m-dicarboxylic acid, diphenylmethane-p,p'-dicarboxylic acid, benzophenone-4,4'-dicarboxylic acid, and naphthalene-dicarboxylic acid. Preferably, terephthalic acid and isophthalic acid are used.

As the functional derivative of the aromatic dicarboxylic acid, there can be mentioned dimethyl esters, diethyl esters and diphenyl esters of the foregoing aromatic dicarboxylic acids. Preferably, dimethyl esters are used.

The precondensate of the polyester is not particularly critical, as long as a further polycondensation is possible. For example, there can be mentioned a precondensate formed by subjecting a mixture comprising an alicyclic diol and an aromatic dicarboxylic acid, at a molar ratio of from 1/1 to 2/1, to esterification so that the degree of polymerization is 3 to 10, and a precondensate formed by subjecting a mixture comprising an alicyclic diol and a dimethyl ester of an aromatic dicarboxylic acid, at a molar ratio of about 2/1, to a methanol-removing ester interchange reaction using an ester inter change catalyst.

Any silicone oil which is physically and chemically stable at temperatures higher than 150°C and does not react with the polyester during the polymerization can be used as the silicone oil, without limitation, in the present invention. For example, there can be mentioned polydimethylsiloxane and polydiphenylsiloxane.

The graft polymer used in the present invention is a dispersant necessary for stably dispersing the precondensate obtained from (A) an alicyclic diol or a mixture of an alicyclic diol and an aliphatic diol, and (B) an aromatic dicarboxylic acid or a derivative thereof, in the form of fine particles in a silicone oil. The graft polymer used in the present invention is a graft polymer comprising a polyorganosiloxane as the backbone and a polymer of a monoethylenically unsaturated monomer as the branch, or a graft polymer comprising a polymer of a monoethylenically unsaturated monomer as the backbone and a polyorganosiloxane as the branch.

The process for the preparation of this graft polymer is not particularly critical and, for example, the processes disclosed in detail in Japanese Unexamined Patent Publication No. 60-141741, No. 60-141715, and No.62-39621 can be adopted.

Preferably the polyorganosiloxane of the graft polymer comprises a component having a structure resembling the structure of the silicone oil used in the present invention as the main constituent component. For example, dimethylsiloxane and diphenyl-siloxane can be mentioned as the structural unit.

As the monoethylenically unsaturated monomer used for the preparation of the graft polymer, there can be mentioned acrylate and methacrylate monomers, aromatic monoalkenyl monomers and vinyl cyanide monomers.

Preferably, acrylate and methacrylate monomers are used. As the main component of the acrylate or methacrylate monomer, there can be mentioned an alkyl acrylate or methacrylate, and a functional group-containing acrylate or methacrylate copolymerizable therewith and other copolymerizable monomer can be contained. The carbon number of the alkyl group of the alkyl acrylate or methacrylate is not particularly critical, but preferably the carbon number of the alkyl group is from 1 to 6. As the copolymerizable functional group-containing acrylates and methacrylates, there can be mentioned acrylates and methacrylates containing a carboxyl group, a glycidyl group, an amino group, a hydroxyl group or an amide group. As specific examples, there can be mentioned acrylic acid, methacrylic acid, glycidyl methacrylate, 2-hydroxyethyl methacrylate and acrylic amide. As another copolymerizable component, there can be mentioned styrene, acrylonitrile and maleic anhydride.

When carrying out the present invention, there can be adopted a method in which a precondensate obtained from (A) an alicyclic diol or a mixture of an alicyclic glycol and an aliphatic glycol and (B) an aromatic dicarboxylic acid or a derivative thereof is added to a silicone oil containing the above-mentioned graft copolymer comprising the polysiloxane as the constituent, and the precondensate is dispersed under shearing, or a method in which the above-mentioned graft polymer is added to the silicone oil containing the precondensate in the molten state, and the precondensate is dispersed under shearing. As a result of the above, a dispersion of the precondensate in the form of fine particles is formed by the action of the graft polymer.

To improve the glycol-removing reactivity of the precondensate at the polymerization stage, and stabilize the dispersion of the precondensate in the silicone oil, preferably the particle size of the dispersed fine particles is not larger than about 300 μm, most preferably from 0.05 to 150 μm.

The amount of the added graft polymer acting as the dispersion stabilizer is not particularly critical, but in view of the dispersion stability, preferably the amount of the graft polymer is at least 0.1% by weight based on the precondensate.

The temperature at the initial stage of the polymerization is changed according to the state of scattering of the removed diol component or the oligomer, and the kinds of the constituents of the intended polyester, but preferably the temperature at the initial stage of the polymerization is lower than or equal to the final polymerization temperature, as in the case of the bulk melt polymerization. Nevertheless, at the final stage of the polymerization, preferably the polymerization is conducted at temperatures in the range of a level at which stirring becomes very difficult during the bulk melt polymerization, because the viscosity is too high to a level lower than the melting point; i.e., in the range of a level higher by 20°C than the melting point of the formed polyester to a level lower by 40°C than the melting point of the formed polyester. If trans-1,4-cyclohexane-dimethanol is used as the alicyclic diol, and terephthalic acid is used as the aromatic dicarboxylic acid, preferably the polymerization is carried out at a temperature of 320 to 270°C.

A polymerization temperature higher by more than 20°C than the melting point is not preferable because the degree of polymerization is lowered in the aromatic polyester comprising the alicyclic diol as one component, by thermal deterioration. Conversely, a polymerization temperature lower by more than 40°C than the melting point is not preferable because the rate of polymerization is thereby drastically reduced.

For the polymerization for the formation of the polyester, any catalysts customarily used in this field can be used.

The obtained polyester is separated from the reaction medium, thoroughly washed with an organic solvent, and is used in the same manner as polyesters obtained by the conventional bulk melt polymerization.

In the process of the present invention, even at final polymerization temperature in the range of from a level higher by 20°C than the melting point to a level lower by 40°C than the melting point, the polyester is present in the form of fine particles in the silicone oil, and accordingly, there is no increase of the stirring torque and no change in the transfer of heat from the polymerization vessel. Therefore a polyester having a high intrinsic viscosity that cannot be obtained without further conducting the solid phase polymerization in the conventional process, can be obtained.

A polyester comprising an alicyclic diol as one component is liable to undergo thermal deterioration, and therefore, a lower polymerization temperature is preferable. In the case of a copolymer comprising at least two diol components, to maintain a constant copolymerization ratio, it is necessary to selectively isolate and remove a low-boiling-point diol component, and for this purpose also, a lower polymerization temperature is preferable. Nevertheless in the conventional bulk melt polymerization, a strong stirring power is necessary because of a rise of the melt viscosity due to the increase of the molecular weight, and therefore, the polymerization temperature cannot be lowered to the vicinity of the melting point. In the solid phase polymerization, since a pellet is subjected to polymerization at a temperature lower than the melting point, the above-mentioned thermal deterioration and change of the copolymerization ratio can be controlled, but the rate of polymerization is very low and the polymerization efficiency is poor.

In contrast, according to the polymerization process of the present invention, the polymerization can be carried out at a temperature close to the melting point of the obtained polyester, and surprisingly, the polymerization can be carried out even at a temperature lower by about 40°C than the melting point of the obtained polyester, but the rate of polymerization remains very high. Namely, the polymerization can be carried out at a rate much higher than in the conventional solid phase polymerization and substantially equal to the rate adopted in the melt polymerization.

The present invention will now be described in detail with reference to the following examples, that by no means limit the scope of the invention.

## Referential Example

### (a) Formation of precondensate (S-1)

| | |
|---|---|
| Dimethyl phthalate | 500 parts by weight |
| 1,4-Cyclohexane-dimethanol | 750 parts by weight |
| Tetrabutoxy titanium | 0.5 part by weight |

The starting material having the above-mentioned composition was charged in a 3-liter flask equipped with a stirrer, the inner atmosphere was replaced by nitrogen, and the methanol-removing reaction was carried out for 2 hours while elevating the temperature to 120 to 250 °C. The obtained precondensate (S-1) was immediately taken out and cooled.

| (b) Formation of Precondensate (S-2) | |
| --- | --- |
| Dimethyl terephthalate | 500 parts by weight |
| 1,4-Cyclohexanedimethanol | 120 parts by weight |
| Ethylene glycol | 310 parts by weight |
| Tetrabutoxy titanium | 0.5 part by weight |

The starting material having the above-mentioned composition was charged in a 3-liter flask equipped with a stirrer, the inner atmosphere was replaced by nitrogen, and the methanol-removing reaction was carried out for 2 hours while elevating the temperature to 120 to 250 °C. The obtained precondensate (S-2) was immediately taken out and cooled.

| (c) Formation of Precondensate (S-3) | |
| --- | --- |
| Dimethyl phthalate | 500 parts by weight |
| Trans-1,4-cyclohexanedimethanol | 750 parts by weight |
| Tetrabutoxy titanium | 0.5 part by weight |

The starting material having the above composition was charged in a 3-liter flask equipped with a stirrer, the inner atmosphere was replaced by nitrogen, and the methanol-removing reaction was carried out for 2 hours while elevating the temperature to 120 to 280 °C. The obtained ester compound, i.e., the precondensate (S-3), wad immediately withdrawn and cooled.

(d) Formation of Graft Polymer (B-1)

A mixture comprising 50 parts by weight of cyclic dimethylsiloxane (3 to 6 recurring units), 3 parts by weight of dimethoxy-3-methacryloyloxypropylmethylsilane, and 1 part by weight of methoxytrimethylsilane was heated and stirred at 140 °C for 3 hours, together with 0.075 part by weight of potassium hydroxide, in a nitrogen atmosphere. The reaction mixture was cooled to 90 °C and 1.3 parts by weight of a 1% aqueous solution of sulfuric acid was added, and the mixture was stirred for 1 hour and washed 3 times with water. The water-washed reaction product was subjected to distillation to remove the unreacted substances, and 45 parts by weight of a silicone polymer (A) was thus obtained.

Then, 70 parts by weight of methyl methacrylate and 1,900 parts by weight of toluene were added together with 0.0025 part by weight of benzoyl peroxide to parts by weight of the silicone polymer (A), and the mixture was heated and stirred at 80 °C for 5 hours in a nitrogen atmosphere. The product was added to excessive acetone to precipitate a graft polymer (B-1), and 80 parts by weight of the graft polymer (B-1) was obtained.

| Example 1 | |
| --- | --- |
| Precondensate (S-1) | 80 parts by weight |
| Silicon oil (polydimethylsiloxane) | 120 parts by weight |
| Graft polymer (B-1) | 2 parts by weight |

The starting material having the above-mentioned composition was charged in a 500 ml flask equipped with a stirrer, and the temperature was elevated to 300 °C in a nitrogen atmosphere. The precondensate was converted to uniform emulsified fine particles just after melting, and polymerization was then carried out under vacuum for 2 hours with stirring. The reaction liquid was very stable during and after the polymerization.

The reaction liquid was cooled and washed with toluene and the formed polyester was recovered. The polyester had a substantially spherical shape having a diameter of about 50 μm. When the $\eta$sp/c value of the polyester was measured at 25°C and a concentration of 0.5 g/dl by using a tetrachloroethane/phenol mixed solvent (50/50 weight ratio), it was found that the $\eta$sp/c was 1.2, and when the melting point of the polyester was measured by DSC, it was found that the melting point was 288°C.

Examples 2 and 3 and Comparative Examples 1 and 2

Polyesters were prepared under the same conditions as described in Example 1 except that only the polymerization temperature was changed as shown below. The $\eta$sp/c value of each polyester was measured, and the results are shown in Table 1.

From the results shown in Table 1, it is seen that a polyester having a high degree of polymerization can be obtained only when the polymerization temperature is within the specific range.

Table 1

| | Polymerization Temperature (°C) | $\eta$sp/c of Polyester | Property |
|---|---|---|---|
| Example 1 | 300 | 1.2 | tough |
| Example 2 | 305 | 1.1 | tough |
| Example 3 | 270 | 0.9 | tough |
| Comparative Example 1 | 315 | 0.6 | brittle |
| Comparative Example 2 | 230 | 0.3 | brittle |

Comparative Examples 3 through 6

Using the same polymerization apparatus as in Example 1, 80 parts by weight of the precondensate (S-1) was charged and the bulk melt polymerization was carried out at a temperature indicated in Table 2.

The results are shown in Table 2, and it can be seen from Table 2 that, if the polymerization is high, the solution viscosity is low and the deterioration is conspicuous. It can be also seen that, if the polymerization temperature is lowered, stirring becomes impossible.

Table 2

| | Polymerization Temperature ($^{\circ}$C) | Stirring | $\eta$sp/c of Polyester | Property |
|---|---|---|---|---|
| comparative Example 3 | 320 | possible | 0.6 | brittle |
| Comparative Example 4 | 340 | possible | 0.3 | brittle |
| Comparative Example 5 | 300 | rotation stopped in 20 minutes because of high viscosity | 0.5 | brittle |
| Comparative Example 6 | 270 | ditto | 0.3 | brittle |

EP 0 366 479 A2

| Examples 4 through 6 and Comparative Examples 8 and 9 | |
|---|---|
| Precondensate (S-2) | 80 parts by weight |
| Silicone oil (polydimethylsiloxane) | 120 parts by weight |
| Graft polymer (B-1) | 2 parts by weight |

The starting material having the above-mentioned composition was polymerized in the same polymerization vessel as used in Example 1, at a temperature shown in Table 3. The $\eta$sp/c value of each obtained polyester was measured, and the results are shown in Table 3. The melting point of the polyester was 240°C.

From the results shown in Table 3, it is seen that also in the case of an aromatic copolyester obtained from an alicyclic diol, an aliphatic diol and an aromatic dicarboxylic acid, a high degree of polymerization can be obtained by the present invention.

Table 3

|  | Polymerization Temperature (°C) | $\eta$sp/c of Recovered Polyester | Property |
|---|---|---|---|
| Example 4 | 255 | 1.1 | tough |
| Example 5 | 240 | 1.3 | tough |
| Example 6 | 215 | 0.9 | tough |
| Comparative Example 8 | 270 | 0.6 | brittle |
| Comparative Example 9 | 200 | 0.2 | brittle |

| Example 7 | |
|---|---|
| Precondensate (S-3) | 80 parts by weight |
| Silicone oil (polydimethylsiloxane) | 120 parts by weight |
| Graft polymer (B-1) | 2 parts by weight |

A polyester was prepared by polymerizing the starting material having the above-mentioned composition at 300°C in the same polymerization apparatus as used in Example 1. The $\eta$sp/c value of the obtained polyester was 1.2, and the melting point was 315°C.

Examples 8 and 9 and Comparative Examples 10 and 11

Polyesters were prepared under the same conditions as described in Example 7, except that the polymerization temperature was changed as shown in Table 4. The $\eta$sp/c value of each polyester was measured, and the results are shown in Table 4.

From the results shown in Table 4, it is seen that, only when the polymerization temperature is within the specific range a polyester having a high degree of polymerization can be obtained.

Table 4 .

|  | Polymerization Temperature (°C) | $\eta$sp/c of Polyester | Property |
|---|---|---|---|
| Example 7 | 300 | 1.2 | tough |
| Example 8 | 320 | 1.2 | tough |
| Example 9 | 280 | 1.0 | tough |
| Comparative Example 10 | 340 | 0.5 | brittle |
| Comparative Example 11 | 250 | 0.4 | brittle |

9

Comparative Examples 12 through 14

The same polymerization vessel as used in Example 7 was used and 80 parts by weight of the precondensate (S-3) was charged, and the bulk melt polymerization was carried out at a polymerization temperature shown in Table 5.

The results are shown in Table 5, and from these results it can be seen that, if the polymerization temperature is high, the solution viscosity is low and the deterioration is conspicuous. It can be also seen that, if the polymerization temperature is lowered, stirring becomes impossible.

Table 5

| | Polymerization Temperature (°C) | Stirring | $\eta$sp/c of Polyester | Property |
|---|---|---|---|---|
| comparative Example 12 | 340 | possible | 0.5 | brittle |
| Comparative Example 13 | 320 | rotation stopped in 20 minutes because of high viscosity | 0.3 | brittle |
| Comparative Example 14 | 280 | rotation stopped in 5 minutes because of high viscosity | 0.2 | brittle |

Comparative Example 15

The polyester obtained in comparative Example 14 was recovered and pulverized to a size of 2 to 3 mm, the pulverized polyester was charged in a flask of a rotary evaporator heated at 280°C, and the pressure was reduced under rotation. After 30 hours, the sample was taken out and it was found that the $\eta$sp·c value of the polyester was 1.1. From this result it can be seen that, according to the polymerization process of the present invention, a polyester having a degree of polymerization equivalent to that of a polyester obtained by the solid phase polymerization can be prepared in a very short time.

**Claims**

1. A process for the preparation of a polyester, which comprises dispersing a precondensate obtained from (A) an alicyclic diol or a mixture of an alicyclic diol and an aliphatic diol and (B) an aromatic dicarboxylic acid or a functional derivative thereof in the form of fine particles in a silicone oil by using a graft polymer comprising a polyorganosiloxane as the backbone and a polymer of a monoethylenically unsaturated monomer as the branch or a graft polymer comprising a polymer of a monoethylenically unsaturated monomer as the backbone and a polyorganosiloxane as the branch as a dispersion stabilizer, and subjecting the dispersion to heat polymerization at a final polymerization temperature in the range of from a temperature lower by 40°C than the melting point of the obtained polyester to a temperature higher by 20°C than the melting point of the obtained polyester.

2. A process for the preparation of a polyester according to claim 1, wherein the precondensate is obtained from trans-1,4-cyclohexane-dimethanol and terephthalic acid or a functional derivative thereof, and the dispersion of the precondensate is subjected to heat polymerization at a polymerization temperature of 270 to 320°C.

3. A process for the preparation of a polyester according to claim 1, wherein the polymer of a monoethylenically unsaturated monomer constituting the graft polymer as the dispersion stabilizer is an acrylate polymer or a methacrylate polymer.

4. A process for the preparation of a polyester according to claim 1, wherein the silicone oil is polydimethylsiloxane or polydiphenylsiloxane.

5. A process for the preparation of a polyester according to claim 1, wherein the polyorganosiloxane constituting the graft polymer as the dispersion stabilizer is dimethylsiloxane or diphenylsiloxane.

6. A process for the preparation of a polyester according to claim 1, wherein the precondensate is dispersed in the form of fine particles having a particle diameter not larger than 300 $\mu$m.

7. A process for the preparation of a polyester according to claim 1, wherein the alicyclic diol is 1,4-cyclohexane-dimethanol.

8. A process for the preparation of a polyester according to claim 1, wherein the alicyclic diol is trans-1,4-cyclohexane-dimethanol.

9. A process for the preparation of a polyester according to claim 1, wherein the aliphatic diol is ethylene glycol.

10. A process for the preparation of a polyester according to claim 1, wherein the aromatic dicarboxylic acid is terephthalic acid or isophthalic acid.

11. A process for the preparation of a polyester according to claim 1, wherein the alicyclic diol/aliphatic diol molar ratio is from 100/0 to 20/80.

12